# EUROPEAN PATENT APPLICATION

(11) **EP 3 974 692 A1**
(43) Date of publication of application: **30.03.2022**
(21) Application number: 21185614.1
(22) Date of filing: 14.07.2021
(51) Int. Cl.: F16L 3/13, F16L 3/223, F16L 3/237

(54) **A SUPPORT CLIP FOR ELONGATED COMPONENT(S)**

(30) Priority: 28.09.2020 EP 20382856
(71) Applicant: Illinois Tool Works, Inc., Glenview, Illinois 60025 (US)
(72) Inventor: BADRENAS, Jordi, Glenview, 60025 (US)
(74) Representative: HGF

(57) **Abstract**

The present invention provides for a support clip for at least one tubular component, comprising, an outer frame member, adapted to resiliently engage with at least one external structure; at least one open-ended sleeve member, having a first end portion and a second end portion circumferentially spaced apart from said first end portion, suspendingly arranged within said outer frame member and adapted to retainingly receive a tubular component, and at least one first spring member, operably coupled to at least one of said first end portion and said second end portion of said sleeve member and said outer frame member, and which is adapted to resiliently urge said at least one of said first end portion and said second end portion towards a respective one of said second end portion and said first end portion upon engagement between said outer frame member and the at least one external structure.

## Description

### Technical Field of Invention

The present invention relates to a support clip for (an) elongate structure(s) such as tubing, piping, cables, conduits and the like, and in particular, to an [adaptively] self-locking spring clip configured to reduce the effect of any external forces onto the coupling between the support clip and the elongate structure(s). In addition, the present invention relates to a support clip for elongate structures configured to provide an [adaptively] self-locking spacer element for two or more elongate structures, such as, for example, used within vehicles.

### Background

In the manufacture of vehicles, many different elongates components, such as, tubular lines, conduits, pipes, cables and the like are widely used to interconnect various vehicle parts within the vehicle body and engine compartment. Here, the elongate components may be secured to portions of the vehicle structure utilising, for example, routing clips, cable clamps or any other suitable fastener. Clips or clamps of this type are particularly useful for fastening brake lines, or electric cables or flexible fluid conduits to automobile bodies.

However, large sections of such elongate components (e.g. cables or flexible conduits) may cross free space within the vehicle body or engine compartment and are therefore subjected to vehicle movement and/or vibrations generated by the engine during use of the vehicle.

Consequently, many of these free-hanging sections of elongate components may be positioned in a fixed relative arrangement between a plurality of elongate components (e.g. cables or flexible conduits) using spacer clips. In addition, such spacer clips or so called spring clips may be coupled separately to individual elongate components, as well as, a plurality of elongate components (in addition to the spacer function) in order to provide a "buffer" or shock absorber when the free-hanging sections of the cables, flexible conduits or any other tubular lines are severely flung around within the vehicle body or engine compartment and possibly and unintentionally make contact with surrounding structures, potentially causing damage to the elongate components and/or displace or even dislodge the spacer member from the elongate component(s).

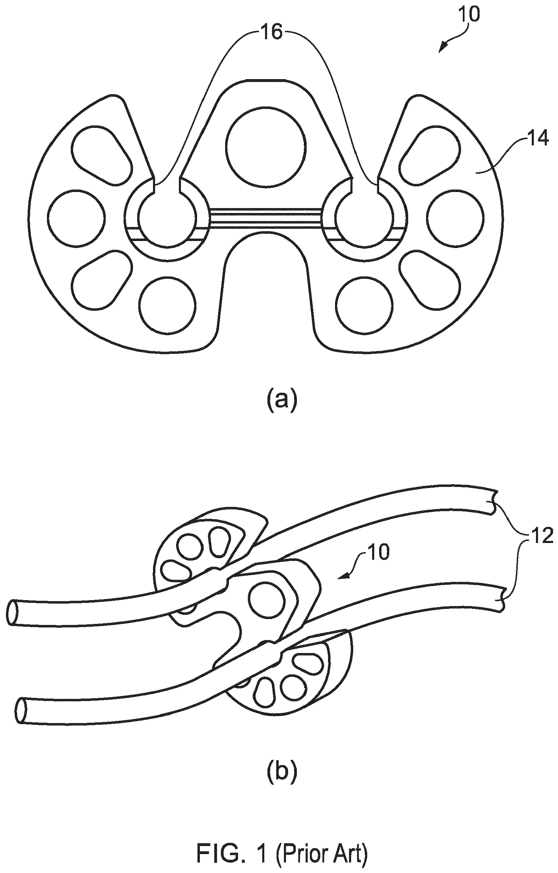

Referring now to Figure 1, a typical spacer member 10 is shown (a) in front view and (b) *in situ* when connected to two tubular lines 12. Such a shock absorbing spacer clip 10 generally comprises a soft material 14, such as, for example, a soft silicone polymer material or a polymeric foam or sponge material, that is adapted to absorb compressive forces (i.e. compressive forces from impact with external structures due to vehicle movement or vibrations). Simple clamp members 16 are operably encased by the soft polymer material 14, so as to provide a shock absorbing buffer zone. Further, the clamp members 16 are configured to receive the one or more elongate components 10.

However, in currently available spring clips or spacer clips, external impact forces may be transmitted directly and uncontrolled to the clamp member(s) so that there is a real risk that the clamp member is loosened and/or sufficiently opened for the clip to be displaced on or even knocked out of engagement with the one or more elongate components. As a result, additional effort and costs may be incurred, because spring clips or spacer clips, as well as, potentially damaged elongate components and/or vehicle parts may have to be restored or replaced.

It is therefore an object of the invention to provide an improved support clip and/or spacer clip where the risk of slipping on the elongate component(s) or even moving out of engagement with the elongate component(s) is minimised.

### Summary of the Invention

An aspect of the invention is set out in the independent claim. Dependent claims describe optional features.

In one aspect of the invention, there is provided a support clip for at least one tubular component, comprising:
an outer frame member, adapted to resiliently engage with at least one external structure;
at least one open-ended sleeve member, having a first end portion and a second end portion circumferentially spaced apart from said first end portion, suspendingly arranged within said outer frame member and adapted to retainingly receive a tubular component;
at least one first spring member, operably coupled to at least one of said first end portion and said second end portion of said sleeve member and to said outer frame member, and which is adapted to resiliently urge said at least one of said first end portion and said second end portion towards a respective one of said second end portion and said first end portion upon engagement between said outer frame member and the at least one external structure.

This provides the advantage that energy transmitted from impact of the support clip with external structures (e.g. from vehicle movement or vibrations of the engine) is controllably directed via the spring member onto at least one end portion of the open-ended sleeve member, so as to move at least one of the end portions of the open-ended sleeve member towards its closed position (i.e. towards the other end portion of the open-ended sleeve member), therefore, increasing the clamping force of the sleeve member onto the tubular structure and "tightening the grip" on the tubular structure retained within the sleeve member. As such, the support clip is able to adapt (i.e. increase) its "grip" onto the tubular component when subjected to external forces caused, for example, by the impact of the support clip with external structure(s) and therefore ensures a secure fixation with the one or more tubular components.

Advantageously, said at least one first spring member may be operably coupling at least one of said first end portion and said second end portion of said sleeve member with said outer frame member. Preferably, at least one of said first end portion and said second end portion may be operably coupled with said outer frame member via one of said at least one first spring member.

Alternatively and advantageously, said at least one first spring member may be operably integrated within a portion of said outer frame member that is coupled to at least one of said first end portion and said second end portion of said sleeve member.

Advantageously, at least a portion of said outer frame member, said at least one open-ended sleeve member and said at least one first spring member may be made from a resilient material.

Advantageously, said outer frame member, said at least one open-ended sleeve member and said at least one first spring member may be integral component parts.

Preferably, said outer frame member, said at least one open-ended sleeve member and said at least one first spring member may be integrally moulded from a resilient material. Even more preferably, said resilient material may be any one of a polymer, a metal, or a compound or combination thereof.

Advantageously, said at least one first spring member may be provided by an S-shaped spring element.

Advantageously, the support clip may comprise at least two of said at least one open-ended sleeve member that are parallelly arranged to and spaced apart from one another.

Advantageously, said outer frame member may be configured [i.e. shaped] so as to convey (or transmit) resilient energy (i.e. impact pressure), provided from resilient engagement between any portion of said outer frame member and the at least one external structure, to any one of said at least one first spring member.

### Brief Description of the Drawings

An exemplary embodiment of the invention is explained in more detail hereinbelow with reference to the figures:
**Figure 1** shows an example of a spacer clip known in the Prior Art (a) in front view, and (b) in perspective view when coupled to two tubular lines;
**Figure 2** shows a first example embodiment of a support clip of the present invention for two elongate components in a perspective front right-side view;
**Figure 3** shows the first embodiment of the support clip of Figure 1 (a) in front view and (b) a close-up view of the spring element, wherein external contact surfaces are provided at the top and bottom of the outer frame to illustrate an example of impact forces;
**Figure 4** shows the first embodiment of Figure 1 under compression from an external top and bottom structure;
**Figure 5** shows a second example embodiment of a support clip of the present invention for one elongate component in a perspective front right-side view;
**Figure 6** shows a third example embodiment of a support clip of the present invention for two parallelly arranged elongate components in a perspective front right-side view, and
**Figure 7** shows the third embodiment of the support clip of Figure 6 in (a) a front view (incl. external top and bottom surfaces) and (b) a close-up view of a spring element under pressure from external contact surfaces that are provided at the top and bottom of the outer frame so as to illustrate an example of impact forces and urged movement of sections of the clip.

### Detailed Description

Certain terminology is used in the following description for convenience only and is not limiting. The words 'upper' and 'lower' and designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, relative positional terms, such as, 'distal', 'proximal', 'lateral' and 'medial' are understood in their normal meaning and in relation to a specific element being described. In particular, these terms designate directions in relation to the tool or user end, e.g. proximal is in a direction towards the installation tool or user, wherein distal refers to the direction away from the installation tool or user.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

Further, the terms 'spacer clip', 'support clip', 'spring clip' are used interchangeably and include any clip or clamp member configured to removably mount onto at least one elongate component (e.g. tubular component, such as a cable or conduit) to provide at least a shock absorber to external impact, as well as, a spacer when used with two or more elongate components.

Like reference numerals are used to depict like features throughout.

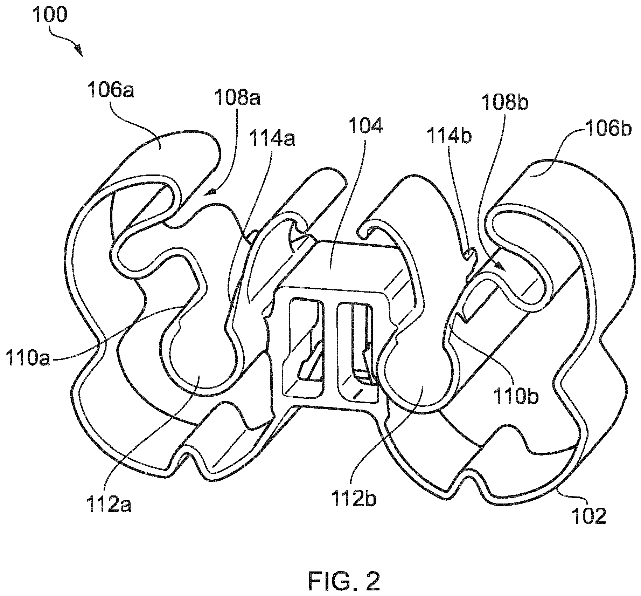

Referring now to Figure 2, a first example embodiment of the support clip 100 of the present invention that is suitable for two elongate components (as spacer and "buffer"), comprises an outer frame 102 extending symmetrically laterally outwards from a bottom portion of a central rib member 104 so as to form a loop back towards a top portion of the central rib member 104. Each one of a distal end portion 106a, 106b of the symmetrical outer frame 102 integrally joins into an S-shaped spring element 108a, 108b that integrally couples to a first end portion 110a, 110b of a suspended open-ended sleeve 112a, 112b (or cradle). A second end portion 114a, 114b extends into an end portion 116a, 116b of the outer frame 102. An outer wall portion of each one of the open-ended sleeve 112a, 112b is attached to side portion of the central rib member 104 so as to parallelly arrange both open-ended sleeves 112a, 112b within the outer frame 102.

The spring element 108a, 108b may have any shape suitable to resiliently transmit external forces (e.g. from impact) onto the first end portion 110a, 110b of the open-ended sleeve 112a, 112b, and is oriented between the first end portion 110a, 110b of the open-ended sleeve 112a, 112b and the distal end portion 106a, 106b of the outer frame 102 in such a way that energy transmitted via the spring element 108a, 108b pushes or urges the first end portion 110a, 110b of the open-ended sleeve 112a, 112b towards its closed position, i.e. towards the second end portion 114a, 114b of the open-ended sleeve 112a, 112b.

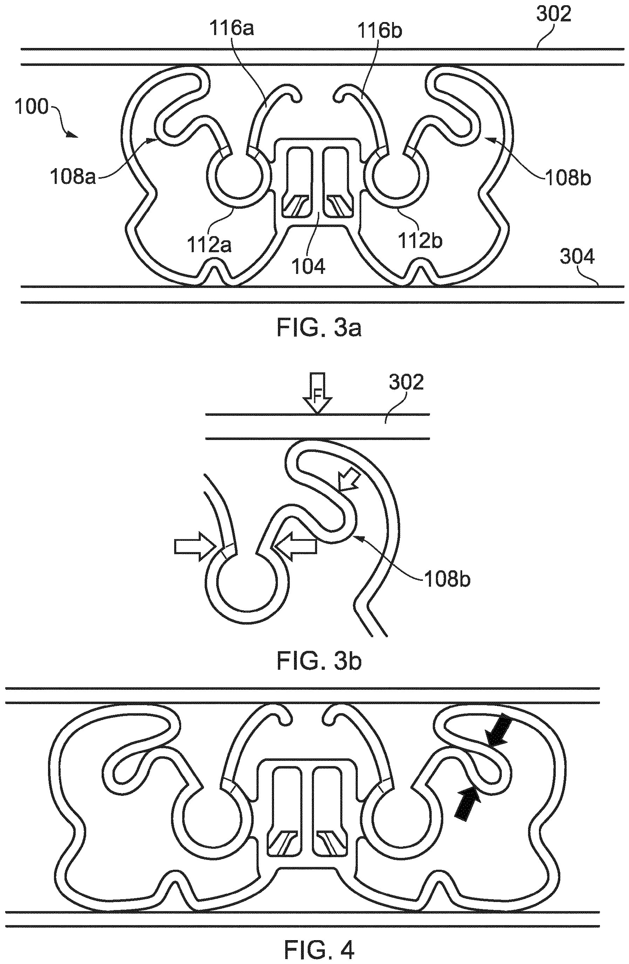

Referring now to Figures 3 and 4, a front view of the first embodiment of the support clip 100 is shown *in situ,* i.e. when compressed by two external structures 302, 304 (see Figure 4), which may be the case when fitted within a vehicle (or any other structure having elongate components, such as, cables, conduits, tubular lines or pipes). Here, as shown in Figure 3 (a) and (b), top and bottom portions of the outer frame 102 engage with the external structures 302, 304. The pressure provided by the external structures 302, 304 resiliently deforms the support clip 100 biasing the spring element 108a, 108b (as well as the end portion 116a, 116b of the resilient outer frame 102) to push the first and second end portion 110a, 110b, 114a, 114b of the open-ended sleeve 112a, 112b towards each other, thus, increasing the clamping pressure provided by the open-ended sleeve 112a, 112b onto the tubular component (not shown). So, external forces onto the outer frame 102 (e.g. from collision with external structures 302, 304 during use) are converted into an increased "grip" of the support clip 100 onto its tubular component, therefore, reducing the risk of displacement on or dislodging from the tubular component(s).

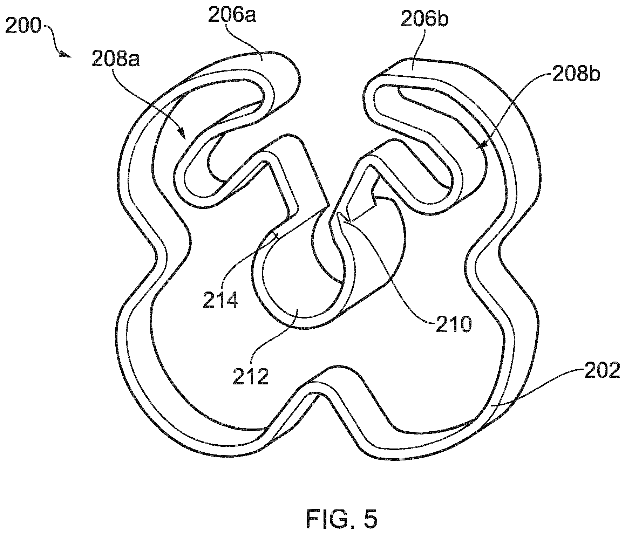

Referring now to Figure 5, a second example embodiment of the support clip 200 of the present invention that is suitable for a single elongate component comprises an outer frame 202 looping around and enclosing an internally suspended open-ended sleeve 212 (or cradle). A first end portion 210 of the open-ended sleeve 212 is integrally coupled to a first end portion 206a of the outer frame 202 via a first spring element 208a, and a second end portion 214 of the open-ended sleeve 212 is integrally coupled to a second end portion 206b of the outer frame 202 via a second spring element 208b. The support clip 200 is symmetrically shaped with respect to the centrally arranged open-ended sleeve 212. It is understood that the second example embodiment of the support clip 200 operates in the same manner as the first example embodiment of the support clip 100 and is therefore not described in any further detail.

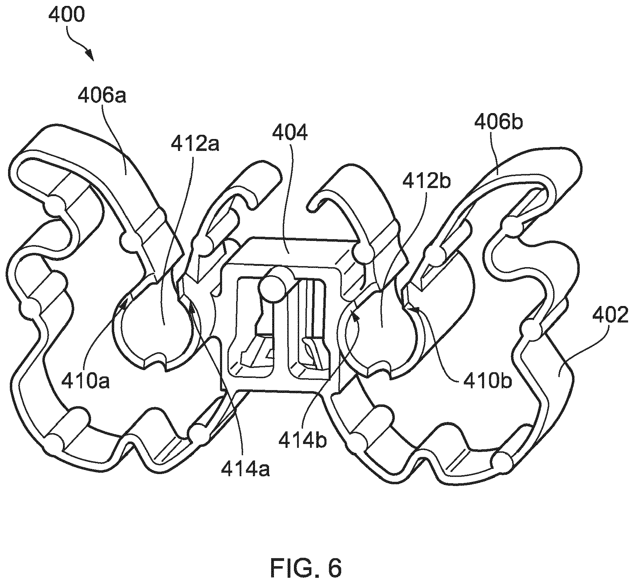

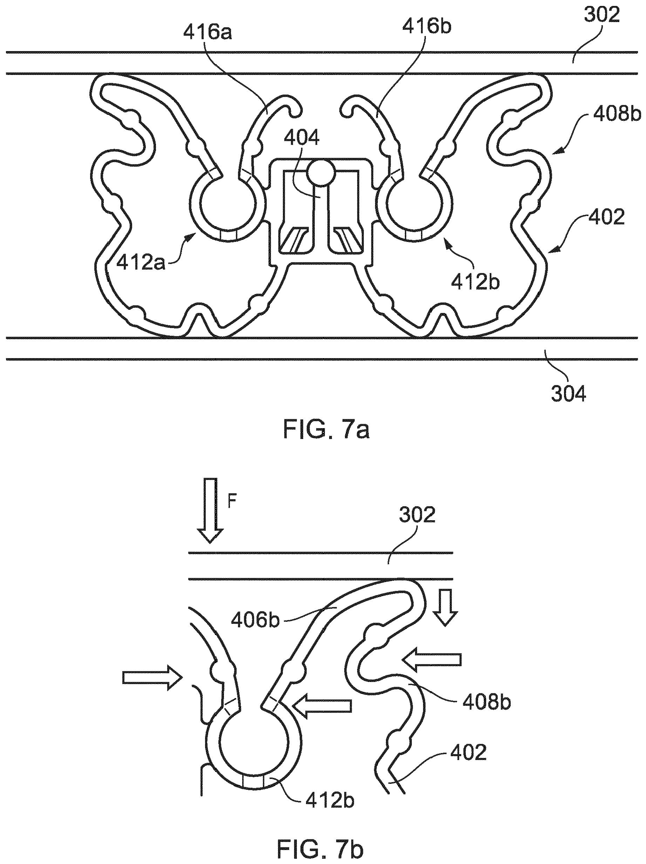

Referring now to Figures 6 and 7 (a) and (b), a third example embodiment of the support clip 400 of the present invention that is suitable for two elongate components (as spacer and "buffer"), comprises an outer frame 402 extending symmetrically laterally outwards from a bottom portion of a central rib member 404 so as to form a loop back towards a top portion of the central rib member 404. Each one of a distal end portion 406a, 406b of the symmetrical outer frame 402 integrally couples to a respective first end portion 410a, 410b of a suspended open-ended sleeve 412a, 412b (or cradle) and joins into an integrally formed S-shaped spring element 408a, 408b that is operably arranged on a lateral section of the outer frame 402.

A second end portion 414a, 414b extends into an end portion 416a, 416b of the outer frame 402. An outer wall portion of each one of the open-ended sleeve 412a, 412b is attached to a side portion of the central rib member 404 so as to parallelly arrange both open-ended sleeves 412a, 412b within the outer frame 102.

The spring element 408a, 408b may have any shape suitable to resiliently transmit external forces (e.g. from impact) onto the first end portion 410a, 410b of the open-ended sleeve 412a, 412b (via the distal end portion of the outer frame 406a, 406b), and is oriented laterally within the outer frame 402 extending from the distal end portion of the outer frame 406a, 406b, in such a way that energy transmitted via the spring element 408a, 408b pushes or urges the first end portion 410a, 410b of the open-ended sleeve 412a, 412b towards its closed position via the distal end portion 406a, 406b of the outer frame 402, i.e. towards the second end portion 414a, 414b of the open-ended sleeve 412a, 412b Figure 7 (b) shows a spring element 408b *in situ,* when under pressure from the external structure(s) 302, 304 with arrows indicating the movement of particular sections of the outer frame 402, spring element 408b and open-ended sleeve 412b.

In these particular example embodiments (100, 200, 400), the outer frame 102, 202, 402 has a relatively flat cross-sectional profile, though, any other suitable cross-sectional profiles are envisaged.

Moreover, the support clip 100, 200, 400 is injection-moulded from a single material (1K injection moulding), such as, for example, a resilient plastic polymer material. However, it is understood by the person skilled in the art that any other suitable material, or a combination of materials, may be used to create the support clip 100, 200, 400. For example, the support clip 100, 200, 400 may also be made from a metal, such as, spring steel (i.e. leaf spring), or any other suitable resilient composite material.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible, for example, variations may exist in shape, size, arrangement (i.e. a single unitary components or two separate components), assembly or the like.

## Claims

1. A support clip for at least one tubular component, comprising:
an outer frame member (102, 202, 402), adapted to resiliently engage with at least one external structure (302, 304);
at least one open-ended sleeve member (112a, 112b, 212, 412a, 412b), having a first end portion (110a, 110b, 210, 410a, 410b) and a second end portion (114a, 114b, 214, 414a, 414b) circumferentially spaced apart from said first end portion, suspendingly arranged within said outer frame member and adapted to retainingly receive a tubular component;
at least one first spring member (108a, 108b, 208a, 208b, 408a, 408b), operably coupled to at least one of said first end portion and said second end portion of said sleeve member and to said outer frame member, and which is adapted to resiliently urge said at least one of said first end portion and said second end portion towards a respective one of said second end portion and said first end portion upon engagement between said outer frame member and the at least one external structure.

2. A support clip according to claim 1, wherein said at least one first spring member is operably coupling at least one of said first end portion (110a, 110b, 210) and said second end portion (114a, 114b, 214) of said sleeve member (112a, 112b, 212) with said outer frame member (102, 202).

3. A support clip according to claim 2, wherein at least one of said first end portion (110a, 110b, 210) and said second end portion (114a, 114b, 214) is operably coupled with said outer frame member (102, 202) via one of said at least one first spring member (108a, 108b, 208a, 208b).

4. A support clip according to claim 1, wherein said at least one first spring member (408a, 408b) is operably integrated within a portion of said outer frame member (402) that is coupled to at least one of said first end portion (410a, 410b) and said second end portion (414a, 414b) of said sleeve member (412a, 412b).

5. A support clip according to any one of the preceding claims, wherein at least a portion of said outer frame member, said at least one open-ended sleeve member and said at least one first spring member is made from a resilient material.

6. A support clip according to any one of the preceding claims, wherein said outer frame member, said at least one open-ended sleeve member and said at least one first spring member are integral component parts.

7. A support clip according to claim 6, wherein said outer frame member, said at least one open-ended sleeve member and said at least one first spring member are integrally moulded from a resilient material.

8. A support clip according to any one of claims 5 to 7, wherein said resilient material is any one of a polymer, a metal, or a compound or combination thereof.

9. A support clip according to any one of the preceding claims, wherein said at least one first spring member is provided by an S-shaped spring element.

10. A support clip according to any one of the preceding claims, comprising at least two of said at least one open-ended sleeve member (112a, 112b, 412a, 412b) that are parallelly arranged to and spaced apart from one another.

11. A support clip according to any one of the preceding claims, wherein said outer frame member is configured so as to convey resilient energy, provided from resilient engagement between any portion of said outer frame member and the at least one external structure, to any one of said at least one first spring member.
